# EUROPEAN PATENT APPLICATION

(11) **EP 1 925 466 A1**
(43) Date of publication of application: **28.05.2008**
(21) Application number: 07120400.2
(22) Date of filing: 09.11.2007
(51) Int. Cl.: B60C 1/00, C08K 3/04, C08K 5/14, C08L 23/22

(54) **Butyl rubber which contains organoperoxide and isobutylene adsorbing activated carbon, pneumatic tire with built-in sealant and method**

(30) Priority: 16.11.2006 US 600554
(71) Applicant: THE GOODYEAR TIRE & RUBBER COMPANY, Akron, OH 44316-0001 (US)
(72) Inventor: Sandstrom, Paul Harry, Cuyahoga Falls, OH 44223 (US); Benko, David Andrew, Munroe Falls, OH 44262 (US)
(74) Representative: Kutsch, Bernd

(57) **Abstract**

The present invention relates to a composition comprising butyl rubber, organoperoxide and isobutylene-adsorbing activated carbon. It further relates to a pneumatic tire with a built-in sealant layer comprising said depolymerized butyl rubber. The invention further relates to a process of organoperoxide depolymerizing butyl rubber in the presence of an isobutylene adsorbing activated carbon filler dispersion.

## Description

### Field of Invention

The present invention relates to a composition comprising butyl rubber, organoperoxide and isobutylene-adsorbing activated carbon, a composition comprising organoperoxide-depolymerized butyl rubber which contains a dispersion therein of particulate isobutylene adsorbing activated carbon filler, a pneumatic tire with a built-in sealant layer comprising said depolymerized butyl rubber, and to a process of organoperoxide depolymerizing butyl rubber in the presence of an isobutylene adsorbing activated carbon filler dispersion.

### Background of the Invention

Various pneumatic tires have been proposed which contain a built-in sealant layer based upon a butyl rubber-composition in which the butyl rubber is depolymerized (at least partially depolymerized) in situ within the tire itself. For example, see US-B- 4,140,167, US-B- 4,895,610, US-B- 4,919,183 and US-B-4,966,213.

The butyl rubber is typically a copolymer comprising isobutylene and a minor amount (e.g. from about 0.5 to about 2 weight percent) of conjugated diene such as for example isoprene.

As the butyl rubber is at least partially depolymerized, a by-product of such depolymerization is isobutylene, one of the original building blocks (monomers) for the butyl rubber.

An important aspect of this invention is an inclusion of a dispersion of an isobutylene-adsorbing activated carbon filler in the built-in sealant composition to adsorb one or more by-products from the butyl rubber depolymerization (to include isobutylene) resulting from the in situ organoperoxide depolymerization process for the butyl rubber within the sealant composition.

Activated carbon, in general, can be a very versatile adsorbent for various gases and liquids in a sense that the size and density of its pores can be considerably varied.

Activated carbon can be, for example, a primarily amorphous particulate form of carbon, usually a microcrystalline, non-graphitic form of carbon, having a large surface area and pore volume which can make it useful in providing adsorptive properties for adsorbing various gases and liquids. For example, its average specific surface area (BET nitrogen adsorption) may be in a range of, for example, from 500 to 2000 m²/g or even greater. Such surface area is of a significant magnitude greater than the average nitrogen adsorption (BET) surface area in a range of, for example, from 8 to 150 m²/g for typical rubber reinforcing carbon blacks and therefore considered herein as being exclusive of such rubber reinforcing carbon blacks.

Commercial grades of activated carbon are often referred to as being gas-phase and liquid-phase adsorbents although the adsorbent abilities may somewhat overlap each other depending upon a particular activated carbon and intended gas and/or liquid to be adsorbed.

Generally, the larger the surface area of the activated carbon, the greater its adsorption capacity with the available surface area of the activated carbon being somewhat dependent upon its pore volume.

Therefore a large surface area may be promoted, for example, by:
(A) maximizing the number of pores of very small dimensions and/or
(B) minimizing the number of pores of very large dimensions.

The pores are often referred to in the sense of their sizes by the International Union of Pure and Applied Chemistry as "micropores", "mesopores" and "macropores".

Micropores are referred to as having a pore width of less than 1.8 nm, mesopores having a pore width of from 1.8 to 50 nm and macropores having a pore width of greater than 50 nm. It is the presence and pore size distribution of the micropores and mesopores which are considered to contribute to the adsorptive capacity of the activated carbon. For example, a relatively high pore volume percentage of mesopores (e.g. above 50 percent of the total pore volume) is generally desirable.

Various raw materials may be used as a source for the carbon by carbonizing and then activation such as, for example and not intended to be limited, wood chips, sawdust, lignite, coconut shells, coal and carbon black refuse, to name a few sources.

Various methods of preparing activated carbon may be used. For example activated carbon may be prepared by one of two distinct processes, namely, by
(A) chemical activation, or
(B) thermal activation.

Thermal activation preferably involves gasification of the carbon at relatively high temperatures, after an initial carbonization of the raw material. Chemical activation preferably involves at least one of a chemical dehydration and condensation reaction, which typically occurs at significantly lower temperatures. For example, a carbonaceous material such as a lignocellulosic material may be treated with a chemical activation agent such as, for example, phosphoric acid or zinc chloride. Such lignocellulosic material may be, for example, wood chips and/or sawdust.

Various functional groups may be also formed, if desired, during activation of the carbon, for example by interaction of free radicals on the carbon surface, to render the surface of the activated carbon chemically reactive and to thereby further influence its adsorptive abilities and properties.

Activated carbon has been commercially manufactured and marketed for many years as adsorbents for various gasses and liquids (including for, example, use in gas masks and automobile gasoline recovery canisters as well as many other uses). Representative examples of various activated carbon as well as applications and methods of preparation may be found, for example, in US-B-5,206,207, US-B-5,212,144, US-B- 5,250,491, US-B- 6,337,302, US-B-6,863,713 and US-B- 6,696,384 (using carboxy methylcellulose post treatment).

Representative of various commercially available activated carbons for various purposes are, for example, activated carbon from the MeadWestvaco Company such as, for example, WV-A900, WV-A1100, WV-A1500, BAX950, BAX1100 and BAX1500; activated carbon from the Carbochem Company such as, for example CARBOCHEM™ GS-75, GL80, VP-50, LP-30, DC-50, DC-40, LQ-900, LQ-1000, LQ900S, LQ-1240 and CA-10; activated carbon and activated carbon families from the Calgon Carbon Corporation as, for example, Ventsorb™, Vapor Pac™, Cal™, Cane Cal™, CPGTM, Filtrasorb™, GW™, MRX™, and WPL-WPH™.

For this invention, it is desired that the activated carbon has a combination of surface area and pore size distribution suitable for absorbing gaseous isobutylene, the preparation and use of which is considered herein to be within the ability of a person skilled in the art of activated carbon preparation without undue experimentation.

In practice, it is considered herein that the use of a dispersion of an isobutylene-adsorbing activated carbon filler in an in situ organoperoxide depolymerized butyl rubber based built-in sealant layer for a pneumatic tire is novel and a significant departure from past practice.

While the mechanism may not be fully understood, an important aspect of the invention is for the inclusion of the dispersion of particulate isobutylene-adsorbing activated carbon filler which can adsorb isobutylene by-product somewhat simultaneously with the depolymerization of the butyl rubber, all in situ within the butyl rubber-containing composition. This is considered herein as being particularly advantageous in the sense of a reduction, of the presence of isobutylene gaseous byproduct within the built-in sealant or in an interface between the built-in sealant and adjoining rubber components such as for example a tire innerliner rubber layer and a tire carcass cord reinforced ply.

In the description of this invention, the term "phr" is used to designate parts by weight of an ingredient per 100 parts of elastomer, including the butyl rubber, unless otherwise indicated. The terms "elastomer" and "rubber" are used interchangeably unless otherwise indicated. The terms "cure" and "vulcanize" are used interchangeably unless otherwise indicated.

### Summary and Practice of the Invention

In accordance with this invention, a composition is provided which comprises butyl rubber and organoperoxide which contains a dispersion of isobutylene-adsorbing activated carbon.

In further accordance with this invention a composition is provided which comprises organoperoxide-depolymerized butyl rubber which contains a dispersion of particulate isobutylene-adsorbing activated carbon.

In additional accordance with this invention, a method is provided of organoperoxide-depolymerizing butyl rubber which comprises the steps of:
(A) blending a particulate isobutylene-adsorbing activated carbon with butyl rubber and an organoperoxide, and
(B) at least partially depolymerizing said butyl rubber with free radicals generated by said organoperoxide in the presence of said isobutylene-adsorbing activated carbon filler, wherein a byproduct of said organoperoxide-depolymerization of said butyl rubber is isobutylene and wherein said isobutylene-adsorbing activated carbon adsorbs at least a portion of said isobutylene byproduct.

In additional accordance with this invention, a pneumatic tire is provided having a built-in sealant layer comprising an organoperoxide-depolymerized butyl rubber, wherein said sealant layer contains a dispersion of a particulate isobutylene-adsorbing activated carbon.

In further accordance with this invention a process of providing a pneumatic rubber tire having a built-in puncture sealing layer comprises:
(A) building a tire having a built-in puncture sealing precursor layer of a composition comprised of butyl rubber, organoperoxide and particulate isobutylene-adsorbing activated carbon, and
(B) partially depolymerizing said butyl rubber in situ within said puncture sealing precursor layer in said tire with free radicals generated by said organoperoxide, wherein a by-product of said organoperoxide-depolymerization of said butyl rubber is isobutylene and wherein said isobutylene-adsorbing activated carbon adsorbs at least a portion of said isobutylene byproduct.

In further accordance with one aspect of this invention where it is desired that said sealant is of black color or a non-black color, said sealant composition is further comprised of, based upon parts by weight per 100 parts by weight rubber, including said butyl rubber (phr);
(A) 25 to 100 phr of particulate reinforcing filler comprising:
   (1) 25 to 100 phr of precipitated silica and from zero up to 5 phr of carbon black, so long as said sealant layer is of a non-black color, wherein said carbon black is a rubber reinforcing carbon black, or;
   (2) 5 to 50 phr of precipitated silica and from 10 to 50 phr of carbon black so long as the sealant layer is of a black color, wherein said carbon black is a rubber reinforcing carbon black;
   (3) from zero to 20 phr, alternately from 3 to 15 phr, of additional filler comprising at least one of clay, calcium carbonate and corn cob granules or their mixtures;
(B) from zero to 6 phr, alternately from 1 to 4 phr, of short organic fibers;
(C) optionally a colorant of other than a black color, where it is desired that said sealant layer is of a non-black color, wherein said colorant comprises at least one of organic pigments, inorganic pigments and dyes, preferably from organic pigments and inorganic pigments;
(D) from zero to 20 phr, alternately from 2 to 15 phr, of rubber processing oil, and
(E) a particulate isobutylene-adsorbing activated carbon:
   (1) in an amount of from 0.5 to 40 phr, alternately from 1 to 20 phr, thereof for a black colored built-in sealant, or
   (2) 0.5 to 3 phr for a non-black built-in sealant so long as the built-in sealant is of a non-black color.

In practice, for said process and for said tire, said butyl rubber may be described, for example, as a copolymer comprising isobutylene and a conjugated diene comprising isoprene, wherein said butyl rubber comprises 0.5 to 1 percent units derived from isoprene, and correspondingly from 99 to 99.5, weight percent units derived from isobutylene.

In additional accordance with this invention a pneumatic tire having a built-in sealant is provided which contains said built-in sealant.

In practice, said built-in sealant layer may be covered by at least one tire rubber innerliner layer.

In practice, said sealant layer is desirably positioned between a carbon black reinforced rubber innerliner layer of the tire and tire carcass cord reinforced carbon black reinforced rubber ply, or between two carbon black reinforced tire rubber innerliner layers. Said tire typically has a rubber tread and rubber sidewall which contain rubber reinforcing carbon black.

In further accordance with this invention, the tire is provided with said non-black colored built-in sealant layer as a tire puncture wound identifier, particularly for a black colored carbon black reinforced tire innerliner puncture (e.g. where the puncturing object extends, or extended, through the tire tread and carcass into and through its rubber innerliner layer), by a physical flow of a portion of said non-black colored built-in sealant layer through said puncture wound (e.g. through the tire innerliner) to form a contrastingly non-black colored sealant on a visible surface of said black colored carbon black reinforced innerliner, tread or sidewall, particularly the tire innerliner.

Accordingly, a pneumatic tire having a tire innerliner puncture wound identifier for a puncture wound extending through the tire tread and carcass into and through its rubber innerliner layer comprising said built-in sealant layer wherein said built-in sealant layer is of a non-black color which contrasts with a black colored tire innerliner layer.

In practice, as hereinbefore discussed, where a synthetic amorphous silica is used (e.g. a precipitated silica), said synthetic amorphous silica may be treated by treatment prior to addition of said organoperoxide either in situ within the rubber composition or by pre-treatment of the silica prior to its addition to the rubber composition with at least one of:
(A) a polyethylene glycol having a weight average molecular weight in a range of from 2,000 to 15,000, alternately 2,000 to 10,000, and
(B) alkoxysilane.

Accordingly, in one aspect of the invention, said synthetic amorphous silica (e.g. precipitated silica) may be a composite thereof.

Representative examples of polyethylene glycols are polyethylene glycols having an average (weight average) molecular weight in a range of from 2,000 to 15,000, alternately from 2,000 to 10,000, are preferred.

Examples of commercially available polyethylene glycols may be, for example, those such as Carbowax™ PEG 3350 as well as Carbowax™ PEG 8000 from the Dow Chemical Company with said Carbowax™ PEG 8000 reportedly having a weight average molecular weight in a range of 7,000 to 9,000 as determined by its NIR (near infrared) method 1 B-ZMETH1.3. A further discussion concerning various polyalkylene oxide polymers, and particularly polyethylene glycols including said Carbowax™ PEG 8000 may be found, for example, , in US-B- 6,322,811 and US-B- 4,082,703.

Said alkoxysilane may be of the general formula (I):

(I) (RO)₃ - Si - R¹

where R is selected from methyl and ethyl radicals, preferably ethyl radicals, and R¹ is a saturated alkyl radical having from 2 through 6 carbon atoms.

Representative of said alkoxysilanes are, for example, trimethoxy methyl silane, dimethoxy dimethyl silane, methoxy trimethyl silane, trimethoxy propyl silane, trimethoxy octyl silane, trimethoxy hexadecyl silane, dimethoxy dipropyl silane, triethoxy methyl silane, triethoxy propyl silane, triethoxy octyl silane, and diethoxy dimethyl silane.

In practice, various conventional clays may be used. Representative of such clays are, for example, kaolin clays. It is envisioned herein that a benefit of utilization of such conventional clay is to provide a modified, or tempered, degree of reinforcement, as compared to the silica, for the sealant precursor composition to aid in its aforesaid processing and also to aid, in combination with the silica, in providing a suitable stiffness and associated dimensional integrity for the partially depolymerized butyl rubber-based sealant composition.

In practice, exfoliated, intercalated water swellable clays can be used in which a significant portion of the clay is present in a form of exfoliated clay platelets. Representative of such clays are, for example, montmorillonite clays and hectorite clays as well as vermiculite for a purpose of also adding a degree of reinforcement.

In practice, a calcium carbonate may also be used. As with the aforesaid conventional clays and exfoliated clay platelets, it is envisioned that a benefit of utilization of such calcium carbonate is to provide a modified, or tempered, degree of reinforcement, as compared to the silica, for the sealant precursor composition to aid in its aforesaid processing and also to aid, in combination with the silica, in providing a suitable stiffness, and associated dimensional integrity for the partially depolymerized butyl rubber-based sealant composition.

For this invention, various synthetic amorphous silicas may be used in a form of a precipitated silica, representative of which are, for example and not intended herein to be limitative, HiSil 532™ from PPG Industries, Hubersil 4155™ from the J. M. Huber Company and Ultrasil™ VN2 and VN3 from the Degussa Company.

Such precipitated silicas are silica aggregates which are considered herein to be in an agglomerated (compacted) form with relatively very low BET (nitrogen) surfaces areas (e.g. reportedly about 60 m²/g for the HiSil 532™ and Hubersil 4155™ silica aggregates, provided in an agglomerated form).

A method of measuring BET (nitrogen) surface area of precipitated silicas is ASTM D 1993-91, Standard Test Method for Precipitated Silica-Surface Area by Multipoint BET Nitrogen Adsorption which relates to the conventional theory described by Brunauer, Emmett and Teller in the Journal of the American Chemical Society, Volume 60, (1938), Page 309.

The optional various rubber processing oils are well known to those having skill in such art. For this invention, a rubber processing oil having a low aromaticity content is preferred, namely a rubber processing oil having an aromaticity content of less than 15 weight percent. Such a preferred rubber processing oil may be composed of, for example, 35 to 45 weight percent naphthenic content, 45 to 55 weight percent paraffinic content and an aromatic content of less than 15 weight percent (e.g. from 10 to 14 weight percent). It is considered herein that a representative of such preferred rubber processing oil is Tufflo 100™ from the Barton Solvent Company. The rubber processing oil, in relatively low concentrations, is seen herein to aid in mixing the ingredients for the sealant precursor composition and to aid in promoting the aforesaid processing of sealant precursor composition.

The optional short fibers may be selected from, for example, cotton fibers and from synthetic fibers selected from rayon, aramid, nylon and polyester fibers, and their mixtures. In practice, such cotton short fibers may have an average length, for example, in a range of up to 200 microns (e.g. an average length of 150 microns) and the synthetic (e.g. the polyester and nylon fibers) may have an average length, for example, of up to a maximum of 2,500 microns. The short fibers are considered herein to aid in promoting the effectiveness of the sealing ability of the resultant sealant composition. In relatively low concentrations, such synthetic fibers are not seen herein as significantly interfering with the processing of the sealant precursor composition yet as promoting the effectiveness of the resultant built-in sealant layer for its puncture sealing ability.

In practice, the colorant may be comprised of titanium dioxide. For example, the colorant of such sealant composition may preferably be composed of titanium dioxide where a white colored sealant layer is desired. Also, such colorant may contain, or be comprised, of titanium dioxide as a color brightener together with at least one non-black organic pigment and/or non-black inorganic pigment or dye.

Various colorants may be used to provide a non-black color to the sealant and sealant precursor composition. Representative of such colorants are, for example, yellow colored colorants as Diarylide Yellow™ pigment from PolyOne Corporation and Akrosperse E-6837™ yellow EPMB pigment masterbatch with an EPR (ethylene/propylene rubber) from the Akrochem Company. As discussed above, such colorant may be used in combination with titanium dioxide with the titanium dioxide being somewhat of a brightener for the colorant.

Various organoperoxides may be used for the sealant precursor butyl rubber-based composition. Preferably organoperoxides are used which become active (e.g. generate peroxide free radicals) at high temperatures, that is, for example, above 100°C. Such organoperoxides are referred to therein as active peroxides. Examples of such organoperoxides which are considered herein as being active organoperoxides are, for example, tertbutyl perbenzoate and dialkyl peroxides with the same or different radicals, such as dialkylbenzene peroxides and alkyl pre-esters. Preferably the active organoperoxide will contain two peroxide groups. Frequently the peroxide groups are attached to a tertiary butyl group. The basic moiety on which the two peroxide groups are suspended can be aliphatic, cycloaliphatic, or aromatic radicals. Some representative examples of such active organoperoxides are, for example, n-butyl 4,4-di-(tert-butylperoxy) valerate, 2,5-bis(t-butyl peroxy)-2,5-dimethyl hexane; 1,1-di-t-butyl peroxi-3,3,5-trimethyl cyclohexane; 2,5-dimethyl-2,5-di(t-butyl peroxy) hexyne-3; p-chlorobenzyl peroxide; 2,4-dichlorobenzyl peroxide; 2,2-bis-(t-butyl peroxi)-butane; di-t-butyl peroxide; benzyl peroxide; 2,5-bis(t-butyl peroxy)-2,5-dimethyl hexane, dicumyl peroxide; and 2,5-dimethyl-2,5-di(t-butyl peroxy) hexane. The n-butyl 4,4-di-(tert-butylperoxy) valerate may be a preferred organoperoxide for use in the depolymerizing of the butyl rubber or composite of butyl rubber together with cis 1,4-polyisoprene rubber and/or liquid cis 1,4-polyisoprene polymer of the butyl rubber containing sealant precursor.

Such organoperoxide may be provided on a mineral carrier such as, for example calcium carbonate or a combination of calcium carbonate and calcium silicate. For example, the n-butyl 4,4-di-(tert-butylperoxy) valerate may be provided as a composite with a mineral carrier. Such mineral carrier may be, for example, combination of calcium carbonate and calcium silicate such as, for example, as Trigonox 17-40B-pd™ from the Akzo Nobel Polymer Chemicals LLC Company.

Thus, such active organoperoxides may be added to the sealant precursor butyl rubber-based composition layer usually as a composite with an inert, free-flowing mineral carrier, such as, for example, calcium carbonate. The organoperoxide as a composite thereof with a mineral carrier, such as for example calcium carbonate, is preferred for storing the peroxide and handling and processing. Such composite may be composed of, for example, from about 35 to 60 weight percent of the active organoperoxide.

In practice, a pneumatic tire having a puncture sealing ability comprised of an assembly of components comprised of an outer circumferential (sulfur curable) rubber tread, (sulfur curable) rubber carcass supporting said tread and an inner layer, may be prepared by, for example:
(A) positioning a layer of said uncured butyl rubber-based rubber composition, exclusive of sulfur curative, as a sealant layer precursor between said innerliner and rubber carcass barrier layer which contains said butyl rubber, or composite of said butyl rubber together with said organoperoxide and said particulate isobutylene-absorbing activated carbon, and
(B) vulcanizing said assembly in a suitable mold at a temperature in a range of from 130°C to 175°C for a sufficient period of time to partially depolymerize said butyl rubber and thereby form a built-in sealant layer.

In practice, it is conventionally preferred that the butyl rubber is blended in at least one sequential non-productive mixing stage in the presence of the particulate isobutylene-absorbing activated carbon filler and in the absence of the organoperoxide followed by a final, or productive, mixing stage in which the organoperoxide (and possibly one or more of the additional ingredients) is added.

Conventionally, the non-productive mixing stage(s) may be conducted, for example, by mixing the ingredients to a temperature in a range of from 110 to 150°C and the subsequent productive mixing stage may be conducted, for example, by mixing the ingredients to a temperature in a range of from 85 to 100°C.

A significant aspect of this invention is the at least partial depolymerization of the butyl rubber-based sealant precursor layer built into the tire (between the tire innerliner and tire carcass) occurs during the vulcanization of the tire itself in a suitable mold at an elevated temperature via said activated organoperoxide in the presence of the said dispersion therein of the isobutylene-adsorbing particulate activated carbon.

In practice, upon vulcanization of the tire assembly under conditions of elevated temperature, a major portion of the uncured butyl rubber composition is considered herein to be depolymerized in the presence of a combination of the organoperoxide and particulate activated carbon filler.

In practice, said tire innerliner halobutyl rubber-based layer is typically a sulfur curative-containing halobutyl rubber composition of a halobutyl rubber such as for example chlorobutyl rubber or bromobutyl rubber.

Such tire halobutyl rubber-based innerliner layer may also contain one or more sulfur curable diene-based elastomers such as, for example, cis 1,4-polyisoprene natural rubber, cis 1,4-polybutadiene rubber and styrene/butadiene rubber, and their mixtures, or more preferably a combination of one or more of said halobutyl rubbers and said diene based elastomers.

As the tire is vulcanized together with the butyl rubber-based rubber composition layer (the sealant layer precursor) sandwiched between the tire carcass and the tire's rubber innerliner, the butyl rubber of the butyl rubber-based composition layer which is to become the sealant layer, becomes partially depolymerized by action of the activated organoperoxide.

In effect, the butyl rubber or combination of butyl rubber together with the cis 1,4-polyisoprene rubber and/or cis 1,4-liquid polyisoprene polymer in the butyl rubber based composition sealant layer is transformed into a puncture sealant layer during the curing of the tire. Thus at least a partial depolymerization of the butyl rubber-based composition layer is produced by the presence of the one or more activated free radical-generating organoperoxides contained in the butyl rubber sealant precursor composition.

The various components of the sealant layer can be mixed together using convenient rubber mixing equipment, particularly an internal rubber mixer. The rubber composition used in the sealant precursor layer typically has sufficient viscosity and unvulcanized tack to enable its incorporation into an unvulcanized tire without significantly departing from conventional tire building techniques.

In an exemplary method of this invention, the butyl rubber-based sealant precursor composition can be formed into a rubber strip by using conventional equipment such as a calender, extruder, or any combination thereof, and the rubber strip assembled into the tire. In building the tires of this invention a rubber innerliner of a butyl rubber based (e.g. bromobutyl rubber) rubber composition is first applied to a building drum and then the strip of butyl rubber based sealant precursor layer is applied to the layer of innerliner and thereafter the remainder of various carcass plies and layers of the tire assembly. The butyl rubber based sealant precursor layer is thereby assembled into the unvulcanized tire assembly of components between an innerliner layer and tire carcass.

The built-in sealant layer may, for example, be positioned between a tire innerliner rubber layer and tire carcass or between two tire innerliner rubber layers.

The built-in sealant layer may be positioned:
(A) in the tire crown region;
(B) in the tire crown region and extends to an adjoining tire shoulder region;
(C) in the tire crown region and extends through an adjoining tire shoulder region to and including at least a portion of a tire sidewall region; or
(D) in the tire crown region and extends through an adjoining tire shoulder region to and including a tire sidewall region and to a tire bead region.

The tire crown region refers to a central portion of a tire between the shoulders of the tire as would be understood by one having skill in such tire art.

The shoulders of the tire are portions of a tire which typically join the tire sidewalls with the tire tread (as well as join the tire sidewalls with the tire crown region) as would be understood by one having skill in such tire art.

The bead region of the tire is typically composed of a relatively inextensive cord reinforced bead bundle which may also contain components such as, for example, chipper, toeguard and chafer rubber components, wherein the bead region is typically intended to fit the tire to a rigid rim, as would be understood by one having skill in such tire art.

In an alternate embodiment of the invention, one or more tire rubber components (for example, a tire innerliner rubber layer and/or tire carcass cord reinforced rubber ply layer), which adjoin (are positioned next to) said built-in sealant layer may also contain a dispersion of an isobutylene-adsorbing activated carbon (or alternatively may contain a dispersion of said isobutylene-adsorbing activated carbon instead of said built-in sealant layer containing a dispersion of said isobutylene-adsorbing activated carbon) to aid in adsorbing said isobutylene byproduct at the interface between said adjoining tire rubber component and said built-in sealant layer.

The thickness of the sealant composition layer can vary greatly in an unvulcanized puncture sealant containing tire. Generally, the thickness of the sealant composition layer may range from 0.13 cm (0.05 inches) to 1.9 cm (0.75 inches). In passenger tires it is normally desired for the sealant composition layer to have a thickness of 0.32 cm (0.125 inches) whereas for truck tires, a thickness of 0.76 cm (0.3 inches) or greater might be desired.

After the unvulcanized pneumatic rubber tires of this invention are assembled they may be vulcanized using a normal tire cure cycle. The tires of this invention can be cured over a wide temperature range. For example, passenger tires might be cured at a temperature ranging from 130°C to 170°C and truck tires might be cured at a temperature ranging from 130°C to 170°C. Thus, a cure temperature may range, for example, from 130°C to 170°C and for a period of time (e.g. from 10 to 45 minutes or more depending somewhat upon the size of the tire and the degree of desired depolymerization of the butyl rubber as well as the thickness of the sealant layer itself) and sufficient to at least partially depolymerize said sealant precursor layer.

Accordingly, in one aspect of the invention, a self-sealing pneumatic rubber tire of this invention is envisioned wherein the tire has sidewalls, a supporting carcass, inextensible beads, an innerliner (air barrier layer), a sealant layer, and an outer circumferential tread (tread portion). The individual sidewalls extend radially inward from the axial outer edges of the tread portion to join the respective inextensible beads. The supporting carcass acts as a supporting structure for the tread portion and sidewalls. The sealant layer is disposed between said supporting carcass and said innerliner. The outer circumferential tread is adapted to be ground contacting when the tire is in use.

The following example is presented to further illustrate a practice of the invention.

### EXAMPLE I

Prospective exemplary illustrative butyl rubber-based non-black colored (yellow colored) sealant precursor (Sample A) and black colored sealant precursor (Sample B) compositions can be prepared by mixing ingredients in an internal mixer. The ingredients can be mixed in a first, non-productive, mixing stage without the organoperoxide followed by a second, productive, mixing stage in which dicumyl peroxide is added. The proposed ingredients are illustrated in the following Table 1. The parts and percentages are by weight unless otherwise indicated.

**Table 1**

| | Parts | |
|---|---|---|
| | (Yellow) | (Black) |
| Material | Sample A | Sample B |
| **First (Non-Productive) Mixing Step (for 2 to 3 minutes to 120°C)** | | |
| Butyl rubber¹ | 100 | 100 |
| Amorphous silica² | 20 | 0 |
| Clay³ | 10 | 0 |
| Calcium carbonate | 10 | 0 |
| Polyethylene glycol⁴ | 0.25 | 0 |
| Rubber processing oil⁵ | 3 | 3 |
| Titanium dioxide pigment | 2 | 0 |
| Colorant as a yellow colored pigment masterbatch⁶ | 2 | 0 |
| Activated carbon (isobutylene-adsorbing activated carbon) | 1 | 12 |
| Carbon black, rubber reinforcing type | 0 | 20 |

| **Second (Productive) Mixing Step (for 1 to 2 minutes to 93°C)** | | |
|---|---|---|
| Organoperoxide, 40 percent active⁷ | 8 | 8 |

| | | |
|---|---|---|
| ¹Butyl rubber as Exxon 068™ from the ExxonMobil Company, having a Mooney (1+8) viscosity at 125°C of 51, as a copolymer of isobutylene and isoprene having less than one percent units derived from isoprene. ²Amorphous precipitated silica as Hubersil 4155 from J. M. Huber Company ³Kaolin clay as RC-32™ from Thiele Kaolin Company ⁴Polylethylene glycol having a weight average molecular weight of 8,000 (understood to be about plus or minus about 1,000) as Carbowax™ PEG 8000 from the Dow Chemical Company ⁵Rubber processing oil as Tufflo 100™ from Barton Solvents Company reportedly a naphthenic, paraffinic rubber processing oil having a maximum aromatic content of less than 15 weight percent ⁶A yellow colored organic/inorganic pigment as Akrosperse E-6837™ yellow EPMB pigment masterbatch with EPR (ethylene/propylene rubber), in a 50/50 weight ratio of yellow pigment to EPR, from the Akrochem Company and reported in Table 1 as the composite. ⁷Composite of 50 parts by weight dicumyl peroxide and 50 parts by weight of a mineral carrier as a combination of calcium carbonate and calcium silicate and reported in Table 1 as the composite. | | |

The Samples A or B can be heated to a temperature of 150°C for 20 minutes to at least partially depolymerize the butyl rubber in the presence of the dicumyl peroxide and dispersion of the particulate isobutylene-adsorbing activated carbon.

### EXAMPLE II

Prospective exemplary illustrative tubeless pneumatic steel belted medium radial truck tires can be prepared by first applying a standard butyl rubber innerliner layer (e.g. bromobutyl rubber composition) to a standard building drum. Then a layer of butyl rubber-based sealant precursor of the composition of said yellow Sample A or black Sample B of Example I having a thickness of 0.76 cm (0.3 inches) can be applied to the innerliner layer on the building drum followed by application of diene rubber based carcass components, including the carcass plies, tread, sidewalls and beads, to form an uncured, or green, tire construction, or assembly, which contains the built-in butyl rubber-based sealant precursor layer.

The green (uncured) tires can be cured in a suitable tire curing mold at a temperature of up to 150°C for 42 minutes to form tires with a built-in sealant layer having a thickness of 0.38 cm (0.15 inches) formed by a partial (substantial) depolymerization of the butyl rubber-based sealant precursor layer by the organoperoxide for which it is considered that the inclusion of the particulate isobutylene-adsorbing activated carbon will adsorb at least a portion of isobutylene gaseous byproduct, all in situ in the presence of the substantially simultaneous butyl rubber depolymerization with an accompanying evolution of isobutylene byproduct, at the elevated tire cure temperature.

## Claims

1. A composition comprising butyl rubber and organoperoxide which contains a dispersion of particulate isobutylene-adsorbing activated carbon.

2. A method of organoperoxide-depolymerizing butyl rubber which comprises the steps of:
(A) blending a particulate isobutylene-adsorbing activated carbon with butyl rubber and an organoperoxide, and
(B) at least partially depolymerizing said butyl rubber with free radicals generated by said organoperoxide in the presence of said isobutylene-adsorbing activated carbon, wherein a by-product of said organoperoxide-depolymerization of said butyl rubber is isobutylene and wherein said isobutylene-adsorbing activated carbon adsorbs at least a portion of said isobutylene byproduct.

3. A pneumatic tire having a built-in sealant layer comprising an organoperoxide-depolymerized butyl rubber, wherein said built-in sealant layer contains a dispersion of a particulate isobutylene-adsorbing activated carbon.

4. The pneumatic tire of claim 3 having a tire innerliner puncture wound identifier for a puncture wound extending through the tire tread and carcass into and through its rubber innerliner layer comprising said built-in sealant layer wherein said built-in sealant layer is of a non-black color which contrasts with a black colored tire innerliner layer.

5. The tire of claim 3 or 4 wherein said built-in sealant layer is positioned:
(A) between a carbon black reinforced rubber innerliner layer and tire carcass, or
(B) between two carbon black reinforced rubber tire innerliner layers, and wherein said built-in sealant layer is further positioned:
(C) in the tire crown region;
(D) in the tire crown region and extends to an adjoining tire shoulder region;
(E) in the tire crown region and extends through an adjoining tire shoulder region to and including at least a portion of a tire sidewall region; or
(F) in the tire crown region and extends through an adjoining tire shoulder region to and including a tire sidewall region and to a tire bead region.

6. The tire of at least one of the claims 3-5 wherein one or more tire rubber components which adjoin said built-in sealant layer contain a dispersion of an isobutylene-adsorbing activated carbon.

7. The tire of at least one of the previous claims 3-6 wherein said isobutylene-adsorbing activated carbon comprises a microcrystalline, non-graphitic form of carbon having a large average specific surface area determined by nitrogen adsorption of from 500 to 2000 m²/g and wherein at least 50 percent of the total pore volume of said isobutylene-adsorbing activated carbon comprises pores having a pore width of from 1.8 to 50 nm.

8. The tire of at least one of the previous claims 3-7 wherein said isobutylene-adsorbing activated carbon is prepared by:
(A) chemical activation, or
(B) thermal activation.

9. The tire of at least one of the previous claims 3-8 wherein said isobutylene-adsorbing activated carbon is prepared by treating a lignocellulosic material with a chemical activation agent and/or wherein said isobutylene-adsorbing activated carbon is post treated with carboxy methylcellulose.

10. A method of providing a pneumatic rubber tire having a built-in puncture sealing layer, the method comprising:
(A) building a tire having a built-in puncture sealing precursor layer of a composition comprising butyl rubber, organoperoxide, and dispersion of particulate isobutylene-adsorbing activated carbon;
(B) partially depolymerizing said butyl rubber in situ within said puncture sealing precursor layer in said tire with free radicals generated by said organoperoxide, wherein a by-product of said organoperoxide-depolymerization of said butyl rubber is isobutylene and wherein said isobutylene-adsorbing activated carbon adsorbs at least a portion of said isobutylene byproduct.
